# FASCICULE DE BREVET EUROPEEN

(11) **EP 0 376 803 B1**
(45) Date de publication et mention de la délivrance du brevet: **08.09.1993**
(21) Numéro de dépôt: 89403557.5
(22) Date de dépôt: 19.12.1989
(51) Int. Cl.: G02C 13/00

(54) **Table de soutien, en particulier pour monture de lunettes**
Unterhaltungstisch, besonders für Brillengestell
Maintenance table, particularly for a spectacle frame

(30) Priorité: 21.12.1988 FR 8816911
(43) Date de publication de la demande: 04.07.1990
(73) Titulaire: ESSILOR INTERNATIONAL Compagnie Générale d'Optique, F-94028 Créteil Cédex (FR)
(72) Inventeur: Brule, François, F-94500 Champigny-sur-Marne (FR); Cuvilly, Jean-Pierre, F-02540 Viels Maisons (FR)
(74) Mandataire: CABINET BONNET-THIRION

(56) Documents cités:
- FR-A- 2 124 265
- FR-A- 2 319 076
- US-A- 3 605 241

## Description

La présente invention concerne d'une manière générale une table de soutien propre à la fixation temporaire d'un quelconque article, du type de celle par exemple qu'il est usuel d'associer à un appareil de lecture de contour, pour le maintien, par rapport au palpeur de celui-ci, d'un article dont tout ou partie du contour est à lire.

Elle vise plus particulièrement le cas où l'article concerné est une monture de lunettes dont il convient de relever le contour des cercles ou entourages en vue de la taille des verres à monter dans ceux-ci.

Les tables de soutien pour monture de lunettes comportent, usuellement, disposés sur une platine, une pluralité de moyens de maintien propres à soutenir une telle monture de lunettes au-dessus d'un évidement de cette platine.

C'est le cas, par exemple, dans les tables de soutien faisant l'objet des brevets français Nos 2.016.998, 2.124.265 et 2.319.076.

Lorsqu'un appareil de lecture de contour est concerné, c'est à la faveur de l'évidement de la platine correspondante qu'intervient le palpeur de celui-ci.

Quoi qu'il en soit, constitués, pour la plupart, de pistons ou de coulisseaux, les moyens de maintien mis en oeuvre dans ces tables de soutien interviennent, en pratique, radialement, suivant des directions qui leur sont propres.

Ces moyens de maintien impliquent une manipulation individuelle de chacun d'eux, et la mise en oeuvre de l'ensemble est donc relativement longue et malaisée.

En outre, si elle est mal exécutée, la manipulation correspondante peut conduire à une déformation de la monture de lunettes de nature à fausser la lecture de contour ensuite effectuée.

Il est donc difficile, avec une table de soutien ainsi réalisée, de tenir compte, au mieux, de la courbure, ou ménisquage, parfois non négligeable, des cercles ou entourages de la monture de lunettes.

Or, cette courbure peut influer sur l'inclinaison d'un tel cercle ou entourage lors de la lecture de son contour.

La monture de lunettes étant supposée globalement disposée à plat, on entend, ici, par inclinaison d'un cercle ou entourage, l'angle que fait le plan moyen de ce cercle ou entourage par rapport à un plan de référence passant par l'axe médian de symétrie de l'ensemble.

Il est clair que, suivant cette inclinaison, le périmètre lu est plus ou moins différent du périmètre réel du cercle ou entourage concerné, ce périmètre lu étant celui du cylindre de projection correspondant.

En pratique, plus l'inclinaison d'un cercle ou entourage de monture de lunettes sur une table de soutien est grande, plus est petit le périmètre qui en est lu.

Il y a donc le risque que le verre taillé sur la base de cette lecture soit trop petit pour le cercle ou entourage à équiper et qu'il puisse ainsi plus ou moins échapper de manière intempestive à celui-ci.

Pour éviter ce risque, il est usuel, pour les praticiens, d'augmenter systématiquement les résultats de la lecture effectuée, pour que le verre taillé soit à coup sûr trop grand pour le cercle ou entourage concerné et qu'il suffise ensuite de le retoucher pour l'adapter à celui-ci.

Mais l'opération de reprise nécessaire à une telle retouche est inévitablement à l'origine d'une perte dispendieuse de temps.

Elle ne peut en outre que conduire à des résultats imparfaits.

La présente invention a d'une manière générale pour objet une table de soutien, en particulier pour monture de lunettes, exempte de ces inconvénients et présentant en outre d'autres avantages.

Cette table de soutien, qui est du genre comportant, disposés sur une platine, une pluralité de moyens de maintien propres à soutenir une monture de lunettes au-dessus d'un évidement de ladite platine, est d'une manière générale, et suivant un premier aspect de l'invention, caractérisée en ce qu'une partie au moins desdits moyens de maintien est portée par un volet monté pivotant et réglable en inclinaison sur ladite platine.

Grâce à un tel réglage en inclinaison,qui, en pratique, intervient après un centrage de la monture de lunettes et un réglage en orientation convenable de celle-ci autour d'un axe perpendiculaire à celui vis-à-vis duquel se fait ce réglage en inclinaison, il est avantageusement possible d'optimiser la lecture de contour à effectuer, en faisant en sorte que le cylindre de projection du cercle ou entourage concerné soit de périmètre aussi grand que possible, et, donc, que le périmètre lu soit ainsi aussi proche que possible du périmètre réel de ce cercle ou entourage.

La taille du verre correspondant se fait dès lors avantageusement directement aux dimensions de ce cercle ou entourage.

De préférence, et suivant un deuxième aspect de l'invention, les moyens de maintien mis en oeuvre comportent, outre un doigt de centrage, diverses butées, dites ici par simple commodité butées d'orientation, qui interviennent d'un côté et de l'autre de l'évidement de la platine, et chacune des butées d'orientation ainsi mises en oeuvre comporte, d'une part, un pan incliné qui se rapproche du côté correspondant de cet évidement en même temps qu'il s'écarte vers le haut de celui-ci, et, d'autre part, sensiblement parallèlement audit évidement, au-dessus de celui-ci, une plaquette de retenue vers laquelle est dirigé ledit pan incliné.

C'est donc à la face arrière de la monture de lunettes concernée que, par la plaquette de retenue de ces butées d'orientation, les moyens de maintien mis en oeuvre suivant l'invention offrent un appui de référence, en l'espèce un appui d'orientation, à cette monture de lunettes.

Ainsi le maintien de cette monture de lunettes lors de sa lecture de contour est avantageusement affranchi des effets de toute saillie éventuellement présente sur sa face avant, par exemple pour sa décoration.

De préférence, et suivant un troisième aspect de l'invention, le doigt de centrage, qui est porté par le volet, est monté coulissant parallèlement à l'axe de pivotement de celui-ci, un doigt auxiliaire, qui porte à son extrémité libre une butée d'orientation, est monté coulissant sur ledit volet parallèlement à ce doigt de centrage, le doigt de centrage et ce doigt auxiliaire portent chacun une crémaillère par laquelle ils engrènent conjointement avec un pignon, qui, disposé entre eux, est monté librement rotatif sur un coulisseau à la disposition de l'opérateur, ledit coulisseau est monté mobile, parallèlement à l'axe de pivotement du volet, entre une position reculée d'attente et une position avancée de service, pour ladite position reculée d'attente, il est prévu, entre ledit coulisseau et ledit volet, des moyens d'encliquetage débrayables propres à une retenue contrôlée dudit coulisseau dans cette position reculée d'attente, et, le doigt de centrage et le doigt auxiliaire étant soumis à des moyens élastiques qui les sollicitent chacun en permanence en direction du côté opposé de l'évidement de la platine, la charge des moyens élastiques auxquels est ainsi soumis le doigt de centrage est supérieure à celle des moyens élastiques auxquels est soumis le doigt auxiliaire.

Les autres butées d'orientation sont, par ailleurs, au moins en service, fixes.

Ainsi, les manipulations qu'a à effectuer un opérateur pour la fixation d'une monture de lunettes sur la table de soutien suivant l'invention sont réduites : il lui suffit de ramener en position reculée d'attente le coulisseau à sa disposition, puis, tout en disposant globalement la monture de lunettes au droit des butées d'orientation fixes opposées, de libérer ce coulisseau.

La mise en oeuvre de la table de soutien suivant l'invention est donc particulièrement rapide et sûre.

En outre, il y a ainsi une avantageuse séparation de fonctions entre le centrage de la monture de lunettes et son réglage en orientation, cette séparation de fonctions permettant avantageusement à ce centrage d'intervenir avant le réglage en orientation, et, a fortiori, avant le réglage en inclinaison auquel il est procédé ultérieurement.

De préférence, et suivant un quatrième aspect de l'invention, la table de soutien suivant l'invention comporte deux volets, qui, disposés l'un à côté de l'autre, sont chacun respectivement montés pivotants autour d'axes de pivotement parallèles, l'un pour une lecture du contour du cercle ou entourage de gauche de la monture de lunettes concernée, l'autre pour une lecture du contour de son cercle ou entourage de droite.

Ainsi, les opérations à effectuer pour passer d'une de ces lectures à l'autre sont elles-mêmes avantageusement réduites.

De préférence, et suivant un cinquième aspect de l'invention, la table de soutien suivant l'invention comporte, en outre, un support auxiliaire monté mobile entre une position rétractée, pour laquelle il est à l'écart de l'évidement de la platine, et une position déployée, pour laquelle il surplombe cet évidement.

Il est ainsi possible, avec la table de soutien suivant l'invention, de lire par exemple le contour d'un gabarit, ou celui d'un verre déjà taillé, dûment rapporté sur le support auxiliaire, en substitution à la lecture du contour du cercle ou entourage correspondant de la monture de lunettes à équiper.

En pratique, la butée d'orientation, supposée fixe, opposée au doigt auxiliaire, est commune aux deux volets que comporte la table de soutien suivant l'invention, le support auxiliaire est disposé du même côté de l'évidement de la platine de celle-ci que cette butée d'orientation, et celle-ci est elle-même montée mobile entre une position rétractée pour laquelle elle est à l'écart de l'évidement de la platine et une position déployée pour laquelle elle surplombe cet évidement, ledit support auxiliaire et ladite butée d'orientation étant sous le contrôle d'une commande commune, qui est à la disposition de l'opérateur, et dont il résulte que l'un est en position rétractée lorsque l'autre est en position déployée et inversement.

La table de soutien suivant l'invention est ainsi avantageusement systématiquement prête, soit à la lecture du contour d'un cercle ou entourage d'une monture de lunettes, soit à la lecture du contour d'un gabarit ou d'un verre déjà taillé.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une table de soutien suivant l'invention ;
la figure 2 en est une vue en plan, suivant la flèche II de la figure 1 ;
les figures 3, 4, 5, 6, 7, 8, 9 et 10 en sont, parfois avec des arrachements, des vues en coupe suivant respectivement les lignes II-II, III-III, IV-IV, V-V, VI-VI, VII-VII, VIII-VIII, IX-IX et X-X de la figure 1, dont certaines sont des lignes brisées ;
la figure 11 est, à échelle différente, et avec un arrachement, une vue partielle en perspective éclatée de certains des constituants de cette table de soutien ;
la figure 12 reprend, pour partie, la vue en plan de la figure 2, pour la position déployée du support auxiliaire que comporte la table de soutien suivant l'invention ;
la figure 13 est une vue en coupe prise suivant la ligne XIII-XIII de la figure 12 ;
la figure 14 est, suivant la ligne XIV-XIV de la figure 13, une vue en coupe du support auxiliaire concerné ;
la figure 15 est une vue partielle en plan, qui, comme la figure 12, reprend pour partie celle de la figure 2, pour une variante de réalisation du support auxiliaire concerné, pour la position rétractée de celui-ci ;
la figure 16 est une vue partielle en élévation de cette variante de réalisation, suivant la flèche XVI de la figure 15 ;
la figure 17 en est une vue partielle en coupe transversale, suivant la ligne XVII-XVII de la figure 16 ;
la figure 18 en est une vue partielle en plan coupe, suivant la ligne brisée XVIII-XVIII de la figure 16.

Tel qu'il y est schématisé en traits interrompus, ces figures illustrent, à titre d'exemple, l'application de l'invention à la fixation temporaire, par exemple par rapport à un quelconque appareil de lecture de contour non représenté, d'une monture de lunettes 10, à cercles ou entourages 11, 11′, pontet médian 12, et branches latérales 13, 13′.

La table de soutien 15 mise en oeuvre à cet effet comporte, de manière connue en soi, disposés sur une platine 16, suivant des modalités décrites plus en détail ultérieurement, une pluralité de moyens de maintien, qui, désignés, ici, par simple commodité, par la référence générale 18, et eux-mêmes décrits plus en détail ultérieurement, sont propres à soutenir cette monture de lunettes 10 au-dessus d'un évidement 19 de la platine 16.

En pratique, seul l'un des cercles ou entourages 11, 11′ de cette monture de lunettes 10, son cercle ou entourage de droite 11 dans la forme de mise en oeuvre représentée, s'étend alors au-dessus de cet évidement 19.

Suivant l'invention, une partie au moins des moyens de maintien 18 est portée par un volet 20 monté pivotant et réglable en inclinaison sur la platine 16.

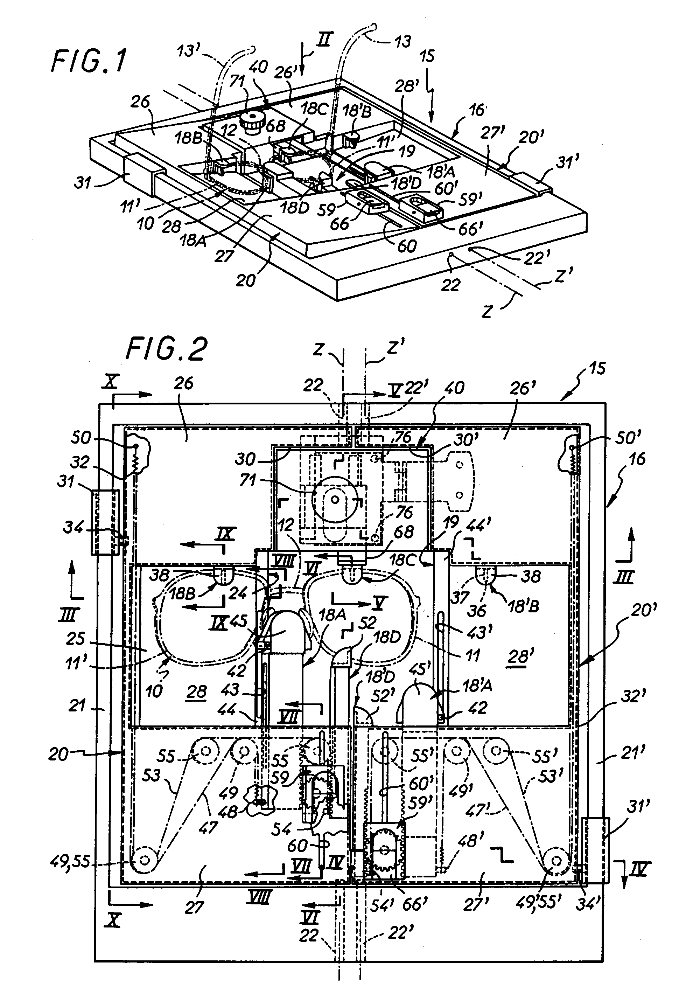

Soit Z l'axe de pivotement de ce volet 20, tel que schématisé en traits interrompus sur les figures 1 et 2.

En pratique, la table de soutien 15 suivant l'invention comporte deux volets 20, 20′, qui, disposés l'un à côté de l'autre, l'un, situé à gauche, pour la lecture du contour du cercle ou entourage de droite 11 de la monture de lunettes 10, l'autre, situé à droite, pour la lecture du contour de son cercle ou entourage de gauche 11′, sont chacun respectivement montés pivotants autour d'axes de pivotement Z, Z′ parallèles.

En pratique, également, la platine 16 de cette table de soutien 15 se réduit, dans la forme de réalisation représentée, à un cadre, qui est de contour globalement rectangulaire, et à l'intérieur duquel l'un et l'autre des volets 20, 20′ s'étendent tout entier.

Les axes de pivotement Z, Z′ des volets 20, 20′ sont parallèles à deux côtés opposés 21, 21′ de ce cadre, et ils sont matérialisés par des tourillons 22, 22′ intervenant entre ces volets 20, 20′ et ses deux autres côtés, dans la zone médiane de ceux-ci.

Les deux volets 20, 20′ étant identiques, seul l'un d'eux, le volet 20, sera décrit en détail ici.

Pour participer à la définition de l'évidement 19 de la platine 16, ce volet 20 présente une échancrure 24 du côté de son axe de pivotement Z, dans la zone médiane de celui-ci.

Il a donc, globalement, une configuration en C.

Le jambage médian 25 du C correspondant forme un dégagement en creux par rapport aux barres 26, 27 qui l'encadrent, avec, au fond de ce dégagement, un pan incliné 28 dirigé vers l'évidement 19 de la platine 16.

Les barres 26, 27 forment par contre des blocs d'un même niveau par rapport à ce dégagement.

Pour des raisons qui apparaîtront ci-après, l'une d'elles, la barre 26, présente, du côté de l'axe de pivotement Z, en continuité avec l'échancrure 24 participant à la définition de l'évidement 19 de la platine 16, une échancrure 30.

Ce sont avec ces barres 26, 27 que sont en prise les tourillons 22.

Sur le côté 21 du cadre constituant la platine 16 parallèle à l'axe de pivotement Z du volet 20 est monté mobile un coulisseau 31, et, pour le réglage en inclinaison de ce volet 20, des moyens de came sont établis entre ce coulisseau 31 et le bord 32 correspondant de ce volet 20.

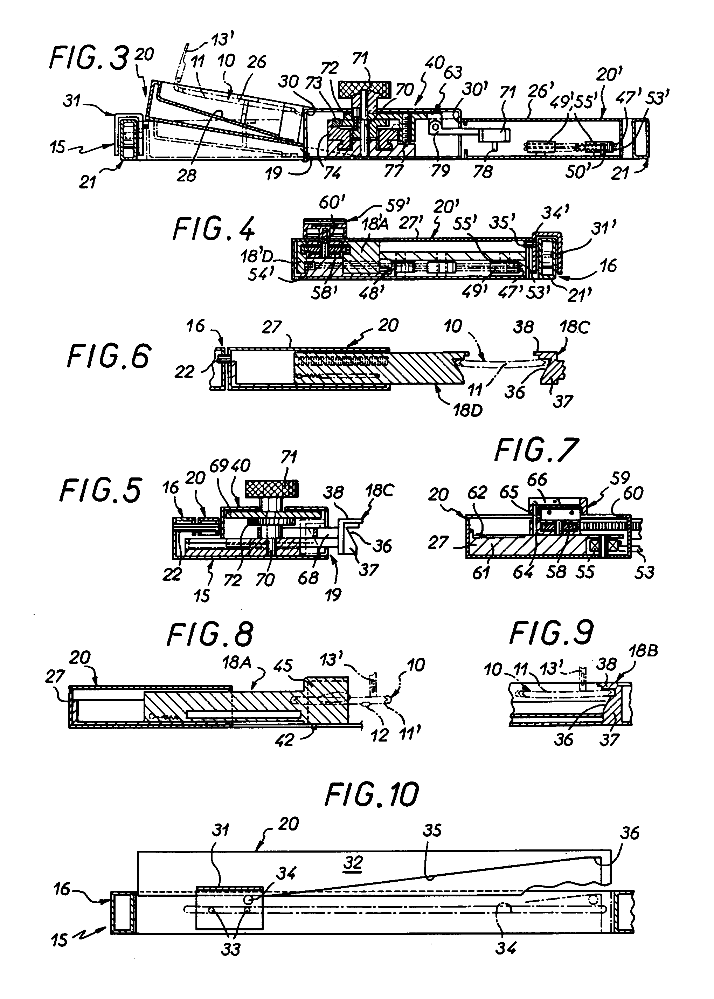

Dans la forme de réalisation représentée, le coulisseau 31 se présente sous la forme d'un cavalier, qui, engagé sur le côté 21 du cadre constituant la platine 16, porte, en saillie, sur la surface interne d'un de ses jambages, deux ergots 33, figure 10, par lesquels il est en prise, pour son guidage, avec une rainure 34 prévue à cet effet sur la face externe correspondante dudit côté 21 de ce cadre.

En outre, dans cette forme de réalisation, les moyens de came prévus entre ce coulisseau 31 et le bord 32 du volet 20 comportent, sur ce coulisseau 31, un ergot 34, qui fait saillie en direction de ce volet 20, et, sur le bord 32 concerné de celui-ci, une rampe 35, par laquelle ce volet 20 porte sur cet ergot 34.

En pratique, cette rampe 35, qui est en creux sur le bord 32 concerné du volet 20, s'étend globalement en oblique, de la face inférieure de ce bord 32 jusqu'à une facette 36 disposée au voisinage immédiat de sa face supérieure.

Ainsi qu'il est aisé de le comprendre, et tel que schématisé à la figure 3, il est possible, par déplacement du coulisseau 31 le long du côté 21 du cadre constituant la platine 16, de faire passer le volet 20 d'une position à plat pour laquelle, tel que représenté en traits interrompus sur cette figure 3, il est escamoté à l'intérieur de ce cadre, à niveau avec celui-ci, à une position inclinée, pour laquelle, tel que représenté en trait plein, il fait saillie hors de ce cadre, en s'étendant en oblique en direction de l'évidement 19 de la platine 16.

Tel que déjà indiqué ci-dessus, le volet 20′ a une constitution identique.

Par mesure de simplicité, la description n'en sera pas reprise ici.

Mais, sur les figures, les mêmes éléments que ceux décrits précédemment ont été pour lui affectés de l 'apostrophe "'".

En pratique, l'évidement 19 de la platine 16 a un contour globalement rectangulaire, avec des côtés parallèles à ceux du cadre constituant cette platine 16.

Deux de ces côtés sont donc parallèles aux axes de pivotement Z, Z′, et les deux autres perpendiculaires à ceux-ci.

Dans la forme de réalisation représentée, les moyens de maintien 18 comportent, pour chacun des volets 20, 20′, d'une part, d'un premier côté de l'évidement 19 de la platine 16 perpendiculaire aux axes de pivotement Z, Z′, un doigt de centrage 18A, 18′A, qui, porté par le volet 20, 20′ correspondant, suivant des modalités décrites plus en détail ultérieurement, est monté coulissant parallèlement à l'axe de pivotement Z, Z′ de celui-ci, à distance de cet axe de pivotement Z, Z′, et qui est destiné à intervenir sur la monture de lunettes 10 dans le plan de symétrie de celle-ci, entre ses deux cercles ou entourages 11, 11′, de préférence à l'écart de ses éventuelles plaquettes nasales, et, d'autre part, du côté opposé de cet évidement 19 de la platine 16, une butée 18B, 18′B, dite ici par simple commodité butée d'orientation, portée, elle aussi, par ledit volet 20, 20′.

Cette butée d'orientation 18B, 18′B est fixe, et, décalée par rapport au doigt de centrage 18A, 18′A correspondant, elle s'étend au-delà de ce doigt de centrage 18A, 18′A par rapport à l'axe de pivotement Z, Z′ du volet 20, 20′ concerné.

Adossée au flanc de la barre 26, 26′ de ce volet 20, 20′, une telle butée d'orientation 18B, 18′B comporte, ainsi qu'il est visible pour l'une d'elles à la figure 9, un pan incliné 36, 36′, qui, formé en pratique par la tranche d'une nervure 37, 37′ perpendiculaire à ce flanc, se rapproche du côté correspondant de l'évidement 19 de la platine 16 en même temps qu'il s'écarte vers le haut de cet évidement 19, et, sensiblement parallèlement audit évidement 19, au-dessus de celui-ci, une plaquette 38, 38′, vers laquelle est dirigé le pan incliné 36, 36′ précédent.

Dans la forme de réalisation représentée, les moyens de maintien 18 comportent, encore, du même côté de l'évidement 19 de la platine 16 que la butée d'orientation 18B, 18′B précédente, au voisinage immédiat de l'axe de pivotement Z, Z′ des volets 20, 20′, une deuxième butée d'orientation 18C.

Pour des raisons qui apparaîtront ci-après, cette deuxième butée d'orientation 18C est commune aux deux volets 20, 20′ et, disposée exactement dans l'axe de la platine 16, entre les axes de pivotement Z, Z′ de ces volets 20, 20′, elle est portée, suivant des modalités décrites plus en détail ultérieurement, par un boîtier fixe 40, qui, solidaire de la platine 16, s'étend à la faveur de l'échancrure 30, 30′ de la barre 26, 26′ de ces volets 20, 20′.

En pratique, cette deuxième butée d'orientation 18C constitue la seule partie des moyens de maintien 18 qui n'est pas portée par un volet 20, 20′.

Cette deuxième butée d'orientation 18C a une même constitution que les butées d'orientation 18B, 18′B précédentes : pan incliné 36, formé par la tranche d'une nervure 37, et plaquette de retenue 38.

Les butées d'orientation 18B, 18′B, 18C sont globalement alignées, perpendiculairement aux axes de pivotement Z, Z′ des volets 20, 20′, et, pour la position à plat de ceux-ci, leurs plaquettes de retenue 38 s'étendent toutes à un même niveau.

En pratique, les butées d'orientation 18B, 18C s'étendent sensiblement de manière symétrique l'une par rapport à l'autre par rapport au doigt de centrage 18A correspondant, et, de même, les butées d'orientation 18′B, 18C s'étendent sensiblement de manière symétrique l'une par rapport à l'autre par rapport au doigt de centrage 18′A.

Chaque doigt de centrage 18A, 18′A est monté coulissant dans la barre 27, 27′ du volet 20, 20′ correspondant, et, pour son guidage, il porte un ergot 42, 42′, par lequel il est en prise avec une rainure 43, 43′ prévue à cet effet sur une languette 44, 44′ prolongeant, du côté de l'évidement 19 de la platine 16, le pan incliné 28, 28′ correspondant de ce volet 20, 20′.

Pour intervention sur la monture de lunettes 10, un tel doigt de centrage 18A, 18′A porte, à son extrémité libre, un nez 45, 45′ globalement arrondi.

Il est en outre soumis à des moyens élastiques qui le sollicitent en permanence en direction du côté opposé de l'évidement 19 de la platine 16, c'est-à-dire en direction des butées d'orientation 18B, 18′B, 18C associées.

Dans la forme de réalisation représentée, ces moyens élastiques sont constitués par un ressort 47, 47′, qui, pour développer au mieux une force constante, est, de préférence, et tel que représenté, de grande longueur, et qui, attelé, à l'une de ses extrémités, à un ergot 48, 48′ solidaire du doigt de centrage 18A, 18′A, est, à son autre extrémité, et après passage sur un certain nombre de poulies de renvoi 49, 49′, attelé, du côté de la barre 26, 26′ opposée du volet 20, 20′ considéré, à un ergot fixe 50, 50′.

Dans la forme de réalisation représentée, les moyens de maintien 18 que comporte la table de soutien 15 suivant l'invention comportent, enfin, un doigt auxiliaire 18D, 18′D, qui, parallèlement au doigt de centrage 18A, 18′A, et du même côté de l'évidement 19 de la platine 16 que celui-ci, est monté coulissant dans la barre 27, 27′ du volet 20, 20′ correspondant, et qui, pour intervention sur la monture de lunettes 10, porte, à son extrémité, une butée d'orientation 52, 52′.

Cette butée d'orientation 52, 52′ a même consitution, à pan incliné 36 formant la tranche d'une nervure 37 et plaquette de retenue 38, que les butées d'orientation 18B, 18′B, 18C précédentes, sa plaquette de retenue 38 et le flasque sur lequel fait saillie sa nervure 37 ayant cependant une extension moindre de moitié, et elle s'étend au même niveau qu'elles.

En pratique, le doigt auxiliaire 18D, 18′D s'étend suivant l'axe de pivotement Z, Z′ du volet 20, 20′ correspondant, au droit des tourillons 22, 22′ de celui-ci.

Comme le doigt de centrage 18A, 18′A associé, il est soumis à des moyens élastiques qui le sollicitent en permanence en direction du côté opposé de l'évidement 19 de la platine 16, et donc, en particulier, en direction de la butée d'orientation 18C.

Dans la forme de réalisation représentée, et pour les mêmes raisons que pour le doigt de centrage 18A, 18′A, ces moyens élastiques sont constitués par un ressort de grande longueur 53, 53′, qui, à l'une de ses extrémités, est attelé à un ergot 54, 54′ solidaire du doigt auxiliaire 18D, 18′D considéré, et qui, après passage sur un certain nombre de poulies de renvoi 55, 55′ dont certaines sont coaxiales des poulies de renvoi 49, 49′ du ressort 47, 47′ associé au doigt de centrage 18A, 18′A, est attelé, à son autre extrémité, du côté de la barre 26, 26′ du volet 20, 20′, à l'ergot 50, 50′ auquel est attelé ce ressort 47, 47′.

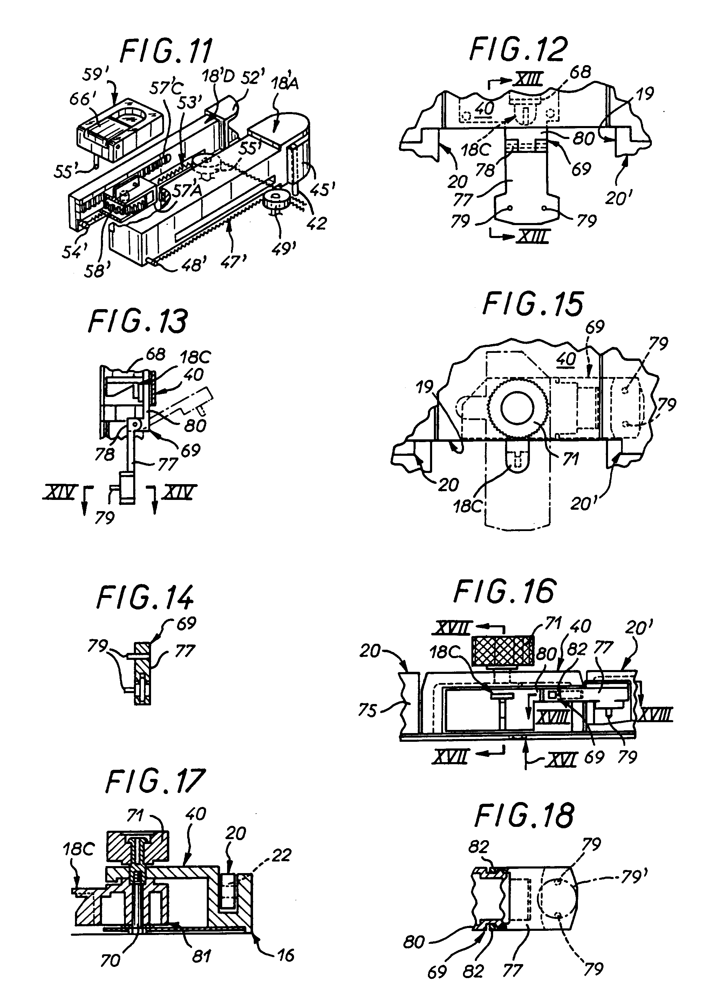

Dans la forme de réalisation représentée et ainsi qu'il est mieux visible pour le doigt de centrage 18′A et le doigt auxiliaire 18′D sur la figure 11, chaque doigt de centrage 18A, 18′A et le doigt auxiliaire 18D, 18′D associé portent chacun une crémaillère 57A, 57′A, 57D, 57′D, par laquelle ils engrènent conjointement avec un pignon 58, 58′, qui, disposé entre eux, est monté librement rotatif sur un coulisseau 59, 59′ à la disposition de l'opérateur.

Ce coulisseau 59, 59′ est lui-même monté mobile, parallèlement à l'axe de pivotement Z, Z′ du volet 20, 20′ correspondant, entre une position reculée d'attente, qui est celle représentée à la figure 1 pour le coulisseau 59′, et une position avancée de service, qui est celle représentée pour le coulisseau 59 sur cette figure 1.

Pour son guidage, chaque coulisseau 59, 59′ présente un flasque médian par lequel il traverse une boutonnière 60, 60′ prévue à cet effet dans la paroi supérieure de la barre 27, 27′ du volet 20, 20′ correspondant.

Pour la position reculée d'attente d'un tel coulisseau 59, 59′, il est prévu, entre ce coulisseau 59, 59′ et le volet 20, 20′ correspondant, des moyens d'encliquetage débrayables propres à une retenue contrôlée de ce coulisseau 59, 59′ dans cette position reculée d'attente.

Dans la forme de réalisation représentée, ces moyens d'encliquetage débrayables comportent, pour chaque coulisseau 59, 59′, et ainsi qu'il est visible sur la figure 7 pour le seul coulisseau 59, une languette élastiquement déformable 62, qui, portée par la base 61 sur laquelle est monté mobile un tel coulisseau 59, 59′, fait saillie sur cette base 61, et qui est destinée à coopérer en retenue avec un cran 64 de ce coulisseau 59, 59′.

Pour sa commande en libération, chaque coulisseau 59, 59′ comporte une tige 65, 65′, qui, traversant en coulissement transversalement un tel coulisseau 59, 59′ sur toute sa hauteur, est montée mobile perpendiculairement à la base 61 correspondante, pour action sur la languette élastiquement déformable 62, et qui, à la surface du coulisseau 59, 59′, est sous le contrôle d'un onglet 66, 66′ monté pivotant sur celui-ci.

Par construction, il est fait en sorte que la charge du ressort 47 constituant les moyens élastiques auxquels est soumis un doigt de centrage 18A, 18′A est supérieure à celle du ressort 53 constituant les moyens élastiques auxquels est conjointement soumis le doigt auxiliaire 18D, 18′D associé.

Il suffit, dès lors, à l'opérateur, pour le maintien par exemple du cercle ou entourage de droite 11 de la monture de lunettes 10 au droit de l'évidement 19 de la platine 16, de ramener, dans un premier temps, vers l'arrière, le coulisseau 59 du volet 20, jusqu'à ce que la languette élastiquement déformable 62 associée à ce coulisseau 59 vienne en prise avec le cran 64 de celui-ci, en bloquant alors temporairement en position reculée d'attente ce coulisseau 59.

Dans son mouvement vers cette position reculée d'attente, le coulisseau 59 entraine, conjointement, par son pignon 58, et à l'encontre des ressorts 47, 53 constituant les moyens élastiques auxquels ils sont soumis, le doigt de centrage 18A et le doigt auxiliaire 18D.

Lorsque, comme indiqué, le coulisseau 59 est bloqué en position reculée d'attente, le doigt de centrage 18A et le doigt auxiliaire 18D sont eux aussi maintenus par lui en position reculée d'attente, ce qui libère l'espace nécessaire à la mise en place de la monture de lunettes 10.

Dans un deuxième temps, l'opérateur procède donc à cette mise en place, en disposant cette monture de lunettes 10 au contact des butées d'orientation 18B, 18C par la partie frontale de ses cercles ou entourages 11, 11′, avec engagement de ces cercles ou entourages 11, 11′ entre le pan incliné 36 et la plaquette de retenue 38 de ces butées d'orientation 18B, 18C.

Il suffit, dans un troisième temps, à l'opérateur, de libérer le coulisseau 59 en appuyant sur son onglet 66.

L'équipage que constituent conjointement ce coulisseau 59, le doigt de centrage 18A et le doigt auxiliaire 18D, se trouve alors globalement soumis aux effets des ressorts 47 et 53 auxquels sont soumis ces derniers.

Mais, la charge du ressort 47 étant supérieure, seul se déplace, d'abord, le doigt de centrage 18A, ce doigt de centrage 18A n'étant suivi qu'ensuite, après un certain retard, par le doigt auxiliaire 18D.

Le doigt de centrage 18A est donc le premier à intervenir sur la monture de lunettes 10, et il en parfait alors le centrage.

Ce n'est ainsi qu'après ce centrage que le doigt auxiliaire 18D intervient à son tour sur la monture de lunettes 10, en en parfaisant alors le réglage en orientation, le pan incliné 36 de sa butée d'orientation 52 provoquant, si nécessaire, une rotation de cette monture de lunettes 10 autour de ses appuis sur les butées d'orientation 18B, 18C opposées jusqu 'à ce que, comme pour ces butées d'orientation 18B, 18C, cette monture de lunettes 10 se trouve plaquée contre la plaquette de retenue 38 de cette butée d'orientation 52.

Il suffit, enfin, à l'opérateur, d'agir sur le coulisseau 31 pour relever plus ou moins le volet 20 jusqu'à ce que le cercle ou entourage de droite 11 de cette monture de lunettes 10 se trouve s'étendre aussi à plat que possible, parallèlement au plan de l'évidement 19 de la platine 16.

Du fait du centrage effectué par le doigt de centrage 18A, la lecture de contour à laquelle il est ensuite procédé permet de connaître toutes les cotes souhaitées, et, notamment, les cotes dites "cotes boxing", de ce cercle ou entourage de droite 11, c'est-à-dire les cotes correspondant au rectangle circonscrit autour du verre à tailler pour son équipement.

Il est procédé de même pour le cercle ou entourage de gauche 11′ de la monture de lunettes 10.

Si désiré, il est associé, à chacun des doigts de centrage 18A, 18′A de la table de soutien 15 suivant l'invention, un microrupteur qui change d'état lorsqu'un tel doigt de centrage 18A, 18′A, passe par exemple de sa position reculée à sa position avancée.

Il est ainsi possible de savoir de manière très simple, pour l'appareil de lecture associé, quel est le doigt de centrage 18A, 18′A qui est en position avancée, et, donc, quel est le cercle ou entourage 11, 11′ de la monture de lunettes 10 qui est en cours de lecture.

Dans ce qui précède, il a été supposé que, comme les butées d'orientation 18B, 18′B, la butée d'orientation 18C était fixe, et il en est d'ailleurs bien ainsi en service.

Mais, dans la forme de réalisation représentée sur les figures 1 à 14, cette butée d'orientation 18C est en fait portée par un doigt 64 monté coulissant dans le boitier fixe 40 parallèlement aux axes de pivotement Z, Z′ des volets 20, 20′, entre une position rétractée pour laquelle, tel que représenté en traits interrompus à la figure 12, cette butée d'orientation 18C est à l'écart de l'évidement 19 de la platine 16, et une position déployée pour laquelle, tel que représenté en trait plein à la figure 2, cette butée d'orientation 18C fait au contraire saillie, comme décrit précédemment, au-dessus de cet évidement 19.

Conjointement, le boîtier fixe 40 porte un support auxiliaire 69, et ce support auxiliaire 69, qui est ainsi disposé du même côté de l'évidement 19 de la platine 16 que la deuxième butée d'orientation 18C, est lui-même monté mobile entre une position rétractée, pour laquelle, tel que représenté en traits interrompus à la figure 2, il est à l'écart de cet évidement 19, et une position déployée, pour laquelle, tel que représenté en trait plein à la figure 12, il surplombe celui-ci.

En pratique, la butée d'orientation 18C et le support auxiliaire 69 sont sous le contrôle d'une commande commune, qui est à la disposition de l'opérateur, et dont il résulte que l'un est en position rétractée lorsque l'autre est en position déployée, et inversement.

Dans la forme de réalisation représentée sur les figures 1 à 14, cette commande commune comporte un axe 70, qui est perpendiculaire au plan de l'évidement 19 de la platine 16, et sur lequel sont calés, au-dessus de la paroi supérieure du boîtier fixe 40, un bouton 71 à la disposition de l'opérateur, et, au dessous de cette paroi, d'une part, le support auxiliaire 69 et, d'autre part, un pignon 72 avec lequel engrène, par une crémaillère 73, un chariot 74 auquel appartient le doigt 68 porteur de la butée d'orientation 18C.

Des moyens d'encliquetage 76 permettent de rendre stables l'une et l'autre des positions du support auxiliaire 69, et donc, conjointement, celles du doigt 68 porteur de la butée d'orientation 18C.

Dans la forme de réalisation représentée sur les figures 1 à 14, la partie d'extrémité 77 du support auxiliaire 69 est articulée par une chape 78 à la partie courante 80 de ce support auxiliaire 69 ; elle est ainsi relevable, ce qui y facilite la fixation, par exemple, d'un gabarit.

Pour une telle fixation, cette partie d'extrémité relevable 77 porte, à distance l'un de l'autre, deux ergots 79 sur lesquels le gabarit dont le contour est à lire doit être engagé.

Pour que la lecture de ce contour se fasse non plus par la tête du palpeur de l'appareil de lecture de contour correspondant mais par la tige de ce palpeur, cette partie d'extrémité relevable 77 est décalée par rapport à la partie courante 80 du support auxiliaire 69, qui, elle, s'étend au-dessus du chariot 74 auquel appartient le doigt 68 porteur de la butée d'orientation 18C.

Pour que soit en service, soit la butée d'orientation 18C, en vue d'une lecture du contour d'un cercle ou entourage de monture de lunettes suivant le processus décrit précédemment, soit le support auxiliaire 69, en vue, par exemple, d'une lecture du contour d'un gabarit porté par celui-ci, il suffit, à l'opérateur, d'agir en conséquence sur le bouton 71 de la commande correspondante.

Comme précédemment, il peut être prévu un microrupteur propre à signaler la situation correspondante.

Dans la variante de réalisation représentée sur les figures 15 à 18, la commande commune au support auxiliaire 69 et à la butée d'orientation 18C comporte, comme précédemment, un axe 70 à bouton 71, mais, sur cet axe 70, sont conjointement calés en rotation tant ledit support auxiliaire 69 que ladite butée d'orientation 18C.

Par exemple, et, tel que représenté, ce support auxiliaire 69 et cette butée d'orientation 18C sont d'un seul tenant, en appartenant l'un et l'autre à une seule et même pièce 81, et celle-ci est directement calée en rotation sur l'axe 70, sans l'intervention d'un quelconque pignon.

En pratique, le support auxiliaire 69 et la butée d'orientation 18C s'étendent sensiblement à 90° l'un par rapport à l'autre.

Par ailleurs, dans cette variante de réalisation, la partie d'extrémité 77 du support auxiliaire 69, au lieu d'être relevable, est détachable.

Par exemple, et tel que représenté, un montage du type à tenon et mortaise est prévu entre elle et la partie courante 80 qu'elle prolonge, et, par deux bras élastiquement déformables 82, elle encadre cette dernière, en étant encliquetée sur celle-ci.

Pour le reste, les dispositions sont du même type que celles précédemment décrites.

En particulier, et tel que représenté en traits continus, le support auxiliaire 69, et plus précisément sa partie d'extrémité 77, comporte des moyens propres à permettre d'y rapporter un gabarit, en l'espèce des ergots 79.

En variante, et tel que schématisé en traits interrompus à la figure 18, il comporte des moyens propres à permettre d'y rapporter un verre déjà taillé, par exemple une ventouse 79′.

Sur la figure 15, les traits continus correspondant à la position déployée de la butée d'orientation 18C, et donc à la position rétractée du support auxiliaire 69, cependant que les traits interrompus correspondant à la position rétractée de la butée d'orientation 18C, et donc à la position déployée du support auxiliaire 69.

Bien entendu, la présente invention ne se limite pas aux formes de réalisation décrites et représentées, mais englobe toute variante d'exécution et/ou de combinaison de leurs divers éléments.

En particulier, si aucun support auxiliaire n'est prévu, la butée d'orientation à laquelle peut être substitué ce support auxiliaire pour la lecture du contour d'un gabarit peut être dédoublée en deux butées d'orientation, à raison d'une par volet.

Dans ce cas, c'est la totalité des moyens de maintien prévus sur la table de soutien suivant l'invention qui sont ainsi portés par de tels volets.

## Revendications

1. Table de soutien pour monture de lunettes, du genre comportant, disposés sur une platine (16), une pluralité de moyens de maintien (18) propres à soutenir une telle monture de lunettes (10) au-dessus d'un évidement (19) de ladite platine (16), caractérisée en ce qu'une partie au moins desdits moyens de maintien (18) est portée par un volet (20, 20′) monté pivotant et réglable en inclinaison sur ladite platine (16).

2. Table de soutien suivant la revendication 1, caractérisée en ce que, la platine (16) comportant un cadre, un coulisseau (31, 31′) est monté mobile sur un côté de ce cadre parallèle à l'axe de pivotement (Z, Z′) du volet (20, 20′), du côté dudit volet (20, 20′) opposé audit axe de pivotement (Z, Z′), et, pour le réglage en inclinaison dudit volet (20, 20′), des moyens de came sont établis entre ce coulisseau (31, 31′) et le bord (32, 32′) correspondant de ce volet (20, 20′).

3. Table de soutien suivant la revendication 2, caractérisée en ce que lesdits moyens de came comportent, sur le coulisseau (31, 31′), un ergot (34, 34′) qui fait saillie en direction du volet (20, 20′), et sur le bord (32, 32′) concerné de ce volet (20, 20′), une rampe (35, 35′) par laquelle ce volet (20, 20′) porte sur ledit ergot (34, 34′).

4. Table de soutien suivant l'une quelconque des revendications 2, 3, caractérisée en ce que la platine (16) se réduit à un cadre à l'intérieur duquel le volet (20, 20′) s'étend tout entier.

5. Table de soutien suivant l'une quelconque des revendications 1 à 4, caractérisée en ce que, pour la définition de l'évidement (19) de la platine (16), le volet (20, 20′) présente une échancrure (24, 24′) du côté de son axe de pivotement (Z, Z′).

6. Table de soutien suivant l'une quelconque des revendications 1 à 5, caractérisée en ce que les moyens de maintien (18) comportent, d'une part, d'un premier côté de l'évidement (19) de la platine (16), un doigt de centrage (18A, 18′A), qui, porté par le volet (20, 20′), est monté coulissant parallèlement à l'axe de pivotement (Z, Z′) de celui-ci, à distance de cet axe de pivotement (Z, Z′), et qui est destiné à intervenir sur la monture de lunettes (10) dans le plan de symétrie de celle-ci, entre ses deux cercles ou entourages (11, 11′), et, d'autre part, du côté opposé de l'évidement (19) de la platine (16), une butée (18B, 18′B) dite ici par simple commodité butée d'orientation, portée, elle aussi, par ledit volet (20, 20′).

7. Table de soutien suivant la revendication 6, caractérisée en ce que ladite butée d'orientation (18B, 18′B) est fixe.

8. Table de soutien suivant l'une quelconque des revendications 6, 7, caractérisée en ce que, décalée par rapport au doigt de centrage (18A, 18′A), ladite butée d'orientation (18B, 18′B) s'étend au-delà dudit doigt de centrage (18A, 18′A) par rapport à l'axe de pivotement (Z, Z′) du volet (20, 20′).

9. Table de soutien suivant l'une quelconque des revendications 6 à 8, caractérisée en ce que, du même côté de l'évidement (19) de la platine (16), il y a, au voisinage immédiat de l'axe de pivotement (Z, Z′) du volet (20, 20′), une deuxième butée d'orientation (18C).

10. Table de soutien suivant les revendications 8, 9, prises conjointement, caractérisée en ce que les deux butées d'orientation (18B, 18C) s'étendent sensiblement de manière symétrique l 'une par rapport à l'autre par rapport au doigt de centrage (18A, 18′A).

11. Table de soutien suivant l'une quelconque des revendications 6 à 10, caractérisée en ce que, du même côté de l'évidement (19) de la platine (16) que le doigt de centrage (18A, 18′A), les moyens de maintien (18) comportent un doigt auxiliaire (18D, 18′D) qui est monté coulissant parallèlement au doigt de centrage (18A, 18′A), et, qui, pour intervention sur la monture de lunettes (10), porte, à son extrémité libre, une butée d'orientationn (52, 52′).

12. Table de soutien suivant l'une quelconque des revendications 6, 9 et 11, caractérisée en ce qu'une butée d'orientation (18B, 18′B, 18C, 52, 52′) comporte un pan incliné (36), qui se rapproche du côté correspondant de l'évidement (19) de la platine (16) en même temps qu'il s'écarte vers le haut dudit évidement (19), et, sensiblement parallèlement audit évidement (19), au-dessus de celui-ci, une plaquette de retenue (38) vers laquelle est dirigé ledit pan incliné (36).

13. Table de soutien suivant l'une quelconque des revendications 6 à 12, caractérisée en ce que le doigt de centrage (18A, 18′A) est soumis à des moyens élastiques (47) qui le sollicitent en permanence en direction du côté opposé de l'évidement (19) de la platine (16).

14. Table de soutien suivant la revendication 11, caractérisée en ce que le doigt auxiliaire (18D, 18′D) est soumis à des moyens élastiques (53) qui le sollicitent en permanence en direction du côté opposé de l'évidement (19) de la platine (16).

15. Table de soutien suivant les revendications 13 et 14, prises conjointement, caractérisée en ce que le doigt de centrage (18A, 18′A) et le doigt auxiliaire (18D, 18′D) portent chacun une crémaillère (57A, 57′A, 57D, 57′D) par laquelle ils engrènent conjointement avec un pignon (58, 58′), qui, disposé entre eux, est monté librement rotatif sur un coulisseau (59, 59′) à la disposition de l'opérateur, ledit coulisseau (59, 59′) est monté mobile, parallèlement à l'axe de pivotement (Z, Z′) du volet (20, 20′), entre une position reculée d'attente et une position avancée de service, pour ladite position reculée d'attente, il est prévu, entre ledit coulisseau (59, 59′) et ledit volet (20, 20′), des moyens d'encliquetage débrayables propres à une retenue contrôlée dudit coulisseau (59, 59′) dans cette position reculée d'attente, et la charge des moyens élastiques (47) auxquels est soumis le doigt de centrage (18A, 18′A) est supérieure à celle des moyens élastiques (53) auxquels est soumis le doigt auxiliaire (18D, 18′D).

16. Table de soutien suivant l'une quelconque des revendications 1 à 15, caractérisée en ce qu'elle comporte deux volets (20, 20′), qui, disposés l'un à côté de l'autre, sont chacun respectivement montés pivotants autour d'axes de pivotement (Z, Z′) parallèles.

17. Table de soutien suivant l'une quelconque des revendications 1 à 16, caractérisée en ce qu'elle comporte en outre un support auxiliaire (69) monté mobile entre une position rétractée, pour laquelle il est à l'écart de l'évidement (19) de la platine (16), et une position déployée, pour laquelle il surplombe cet évidement (19).

18. Table de soutien suivant les revendications 9, 16 et 17, prises conjointement, caractérisée en ce que ladite deuxième butée d'orientation (18C) est commune aux deux volets (20, 20′), le support auxiliaire (69) est disposé du même côté de l'évidement (19) de la platine (16) que cette deuxième butée d'orientation (18C), et celle-ci est elle-même montée mobile entre une position rétractée, pour laquelle elle est à l'écart de l'évidement (19) de la platine (16), et une position déployée, pour laquelle elle fait saillie dans cet évidement (19), ledit support auxiliaire (69) et ladite butée d'orientation (18C) étant sous le contrôle d'une commande commune, qui est à la disposition de l'opérateur, et dont il résulte que l'un est en position rétractée lorsque l'autre est en position déployée, et inversement.

19. Table de soutien suivant la revendication 18, caractérisée en ce que ladite commande comporte un axe (70), qui est perpendiculaire au plan de l'évidement (19) de la platine (16), et sur lequel sont calés, d'une part, le support auxiliaire (69), et, d'autre part, un pignon (72) avec lequel engrène, par une crémaillère (73), un doigt (68) porteur de la deuxième butée d'orientation (18C).

20. Table de soutien suivant la revendication 18, caractérisée en ce que ladite commande comporte un axe (70), qui est perpendiculaire au plan de l'évidement (19) de la platine (16), et sur lequel sont calés, d'une part, le support auxiliaire (69), et, d'autre part, la deuxième butée d'orientation (18C).

21. Table de soutien suivant l'une quelconque des revendications 17 à 20, caractérisée en ce que la partie d'extrémité (77) du support auxiliaire (69) est relevable.

22. Table de soutien suivant l'une quelconque des revendications 17 à 21, caractérisée en ce que la partie d'extrémité (77) du support auxiliaire (69) est détachable.

23. Table de soutien suivant l'une quelconque des revendications 17 à 22, caractérisée en ce que le support auxiliaire (69) comporte des moyens propres à permettre d'y rapporter un gabarit.

24. Table de soutien suivant l'une quelconque des revendications 17 à 22, caractérisée en ce que le support auxiliaire (69) comporte des moyens propres à permettre d'y rapporter un verre.

## Claims

1. A support table for a spectacles frame, of the type comprising, disposed on a plate member (16), a plurality of holding bans (18) for supporting such a spectacles frame (10) above an opening (19) of said plate member (16), characterised in that a part at least of said support mean (18) is carried by a flap (20, 20') which is mounted pivotably and adjustably in respect of inclination on said plate member (16).

2. A support table according to claim 1 characterised in that, the plate member (16) comprising a frame, a slide (31, 31') is mounted movably on a side of said frame parallel to the axis of pivotal movement (Z, Z') of the flap (20, 20'), on the side of said flap (20, 20') which is opposite to said axis of pivotal movement (Z, Z') and, for adjustment in respect of inclination of said flap (20, 20'), cam means are provided between said slide (31, 31') and the corresponding edge (32, 32') of said flap (20, 20').

3. A support table according to claim 2 characterised in that said cam means comprise, on the slide (31, 31'), a lug (34, 34') which projects towards the flap (20, 20'), and, on the edge (32, 32') in question of said flap (20, 20'), a ramp (35, 35') by way of which said flap (20, 20') bears against said lug (34, 34').

4. A support table according to either one of claims 2 and 3 characterised in that the plate member (16) is reduced to a frame, in the interior of which the flap (20, 20') extends in its entirety.

5. A support table according to any one of claims 1 to 4 characterised in that, for defining the opening (19) of the plate member (16), the flap (20, 20') has a recess (24, 24') at the side of its axis of pivotal movement (Z, Z').

6. A support table according to any one of claims 1 to 5 characterised in that the holding means (18) comprise on the one hand, on a first side of the opening (19) of the plate member (16), a centering finger (18A, 18'A) which, carried by the flap (20, 20'), is mounted slidably in parallel relationship with the axis of pivotal movement (Z, Z') thereof, at a spacing from said axis of pivotal movement (Z, Z'), and which is intended to act on the spectacles frame (10) in the plane of symmetry thereof, between its two circles or lens mountings (11, 11'), and, on the other hand, on the opposite side of the opening (19) of the plate member (16), an abutment (18B, 18'B), which is referred to herein for the sake of convenience as the orientation abutment, which is also carried by said flap (20, 20').

7. A support table according to claim 6 characterised in that said orientation abutment (18B, 18'B) is fixed.

8. A support table according to either one of claims 6 and 7 characterised in that, displaced with respect to the centering finger (18A, 18'A), said orientation abutment (18B, 18'B) extends beyond said centering finger (18A, 18' A) with respect to the axis of pivotal movement (Z, Z') of the flap (20, 20').

9. A support table according to any one of clad 6 to 8 characterised in that, on the sane side of the opening (19) of the plate member (16), there is a second orientation abutment (18C) in the immediate vicinity of the axis of pivotal movement (Z, Z') of the flap (20, 20').

10. A support table according to claims 8 and 9 in combination characterised in that the two orientation abutments (18B, 18C) extend substantially symmetrically relative to each other with respect to the centering finger (18A, 18'A).

11. A support table according to any one of claims 6 to 10 characterised in that, on the same side of the opening (19) of the plate member (16) as the centering finger (18A, 18'A), the holding means (18) comprise an auxiliary finger (18D, 18'D) which is mounted slidably in parallel relationship with the centering finger (18A, 18'A) and which, in order to act on the spectacles frame (10), carries an orientation abutment (52, 52') at its free end.

12. A support table according to any one of claims 6, 9 and 11 characterised in that an orientation abutment (18B, 18'B, 18C, 52, 52') comprises an inclined surface portion (36) which extends towards the corresponding side of the opening (19) of the plate member (16) at the same time as it moves away upwardly from said opening (19) and, substantially parallel to said opening (19), above same, a retaining plate portion (38) towards which said inclined surface portion (36) is directed.

13. A support table according to any one of claims 6 to 12 characterised in that the centering finger (18A, 18'A) is subjected to resilient means (47) which continuously urge it in the direction of the opposite side of the opening (19) of the plate member (16).

14. A support table according to claim 11 characterised in that the auxiliary finger (18D, 18'D) is subjected to resilient means (53) which continuously urge it in the direction of the opposite side of the opening (19) of the plate member (16).

15. A support table according to claims 13 and 14 in combination characterised in that the centering finger (18A, 18'A) and the auxiliary finger (18D, 18'D) each carry a rack (57A, 57'A, 57D, 57'D) by way of which they jointly mesh with a pinion (58, 58') which, disposed between them, is freely rotatably mounted on a slide (59, 59') for operation by the operator, said slide (59, 59') is mounted movably in parallel relationship to the axis of pivotal movement (Z, Z') of the flap (20), 20') between a withdrawn waiting position and an advanced service position, for said withdrawn waiting position there are provided between said slide (59, 59') and said flap (20, 20') disengageable latching means for controlled retention of said slide (59, 59') in said withdrawn waiting position, and the force of the resilient means (47) to which the centering finger (18A, 18' A) is subjected is greater than that of the resilient means (53) to which the auxiliary finger (18D, 18'D) is subjected.

16. A support table according to any one of claims 1 to 15 characterised in that it comprises two flaps (20, 20') which, disposed one beside the other, are each respectively mounted pivotably about parallel axes of pivotal movement (Z, Z').

17. A support table according to any one of claims 1 to 16 characterised in that it further comprises an auxiliary support (69) mounted movably between a retracted position in which it is moved away from the opening (19) of the plate member (16) and an extended position in which it extends over said opening (19).

18. A support table according to claims 9, 16 and 17 in combination characterised in that said second orientation abutment (18C) is common to the two flaps (20, 20'), the auxiliary support (69) is disposed on the same side of the opening (19) of the plate member (16) as said second orientation abutment (18C), and the latter is itself mounted movably between a retracted position in which it is moved away from the opening (19) of the plate member (16) and an extended position in which it projects into said opening (19), said auxiliary support (69) and said orientation abutment (18C) being under the control of a common control means which is available for operation by the operator and which provides that one is in the retracted position when the other is in the extended position and vice-versa.

19. A support table according to claim 18 characterised in that said control means comprises a spindle (70) which is perpendicular to the plane of the opening (19) of the plate member (16) and on which are fixed on the one hand the auxiliary support (69) and on the other hand a pinion (72) with which a finger (68) carrying the second orientation abutment (18C) meshes by way of a rack (73).

20. A support table according to claim 18 characterised in that said control means comprises a spindle (70) which is perpendicular to the plane of the opening (19) of the plate member (16) and on which are fixed on the one hand the auxiliary support (69) and on the other hand the second orientation abutment (18C).

21. A support table according to any one of claims 17 to 20 characterised in that the end part (77) of the auxiliary support (69) can be raised.

22. A support table according to any one of claims 17 to 21 characterised in that the end part (77) of the auxiliary support (69) is detachable.

23. A support table according to any one of claims 17 to 22 characterised in that the auxiliary support (69) comprises means for permitting a template to be fitted thereto.

24. A support table according to any one of claims 17 to 22 characterised in that the auxiliary support (69) comprises means for permitting a lens to be fitted thereto.

## Patentansprüche

1. Unterstützungstisch für Brillengestell, der eine Vielzahl von auf einer Grundplatte (16) angeordneten Haltemitteln (18) aufweist, die geeignet sind, ein derartiges Brillengestell (10) oberhalb einer Aussparung (19) der Grundplatte (16) zu halten, dadurch gekennzeichnet, daß wenigstens ein Teil der Haltemittel (18) durch eine Klappe (20, 20') getragen ist, die schwenkbar und in der Neigung einstellbar auf der Grundplatte (16) angebracht ist.

2. Unterstützungstisch nach Anspruch 1, dadurch gekennzeichnet, daß, wobei die Grundplatte (16) einen Rahmen aufweist, ein Schieber (31, 31') beweglich auf einer Seite des Rahmens parallel zur Schwenkachse (Z, Z') der Klappe (20, 20') gelagert ist, und zwar auf der Seite der Klappe (20, 20'), die der Schwenkachse (Z, Z') gegenüberliegt, und zur Verstellung der Klappe (20, 20') in der Höhe Nockenmittel eingerichtet sind zwischen dem Schieber (31, 31') und dem entsprechenden Rand (32, 32') der Klappe (20, 20').

3. Unterstützungstisch nach Anspruch 2, dadurch gekennzeichnet, daß die Nockenmittel auf dem Schieber (31, 31') einen Vorsprung (34, 34') aufweisen, der in Richtung der Klappe (20, 20') vorspringt, und auf dem betreffenden Rand (32, 32') der Klappe (20, 20') eine schiefe Ebene (35, 35'), durch die die Klappe (20, 20') auf den Vorsprung (34, 34') führt.

4. Unterstützungstisch nach einem der Ansprüche 2, 3, dadurch gekennzeichnet, daß die Grundplatte (16) sich auf einen Rahmen verkleinert, innerhalb dessen sich die Klappe (20, 20') ganz erstreckt.

5. Unterstützungstisch nach einem der Ansprüche 1 bis 4, dadurch gekennzeichnet, daß für die Definition der Aussparung (19) der Platine (16) die Klappe (20, 20') einen bogenförmigen Ausschnitt (24, 24') auf der Seite ihrer Schwenkachse (Z, Z') zeigt.

6. Unterstützungstisch nach einem der Ansprüche 1 bis 5, dadurch gekennzeichnet, daß die Haltemittel (18) einerseits auf einer ersten Seite der Aussparung (19) der Grundplatte (16) einen Zentrierungszapfen (18A, 18'A) aufweisen, der getragen durch die Klappe (20, 20') gleitend parallel zu deren Schwenkachse (Z, Z') angebracht ist, und zwar im Abstand von dieser Schwenkachse (Z, Z'), und der bestimmt ist, auf dem Brillengestell (10) in dessen Symmetrieebene einzugreifen, und zwar zwischen seinen zwei Kreisen oder Einfassungen (11, 11') und andererseits auf der der Aussparung (19) der Grundplatte (16) gegenüberliegenden Seite einen Anschlag (18B, 18'B), der hier aus Vereinfachungsgründen Ausrichtungsanschlag genannt ist, der ebenfalls durch die Klappe (20, 20') getragen ist.

7. Unterstützungstisch nach Anspruch 6, dadurch gekennzeichnet, daß der Ausrichtungsanschlag (18B, 18'B) fixiert ist.

8. Unterstützungstisch nach einem der Ansprüche 6, 7, dadurch gekennzeichnet, daß der Ausrichtungsanschlag (18B, 18'B, der bezüglich des Zentrierungszapfens (18A, 18'A) verschoben bzw. versetzt ist, sich jenseits des Orientierungszapfens (18A, 18'A) bezüglich der Schwenkachse (Z, Z') der Klappe (20, 20') erstreckt.

9. Unterstützungstisch nach einem der Ansprüche 6 bis 8, dadurch gekennzeichnet, daß es auf derselben Seite der Aussparung (19) der Grundplatte (16) in unmittelbarer Nachbarschaft der Schwenkachse (Z, Z') der Klappe (20, 20') einen zweiten Ausrichtungsanschlag (18C) gibt.

10. Unterstütsungstisch nach den Ansprüchen 8, 9, in Kombination, dadurch gekennzeichnet, daß die zwei Ausrichtungsanschläge (18B, 18C) sich praktisch symmetrisch zueinander bezüglich des Zentrierungszapfens (18A, 18'A) erstrecken.

11. Unterstützungstisch nach einem der Ansprüche 6 bis 10, dadurch gekennzeichnet, daß auf derselben Seite der Aussparung (19) der Grundplatte (16) wie der Zentrierungszapfen (18A, 18'A) die Haltemittel (18) einen Hilfszapfen (18D, 18'D) aufweisen, der parallel zum Zentrierungszapfen (18A, 18'A) gleitfähig angebracht ist, und der zum Eingriff auf dem Brillengestell (10) an seinem freien Ende einen Ausrichtungsanschlag (52, 52') trägt.

12. Unterstützungstisch nach einem der Ansprüche 6, 9 bis 11, dadurch gekennzeichnet, daß ein Ausrichtungsanschlag (18B, 18'B, 18C, 52, 52') ein geneigtes Fach (36) aufweist, das sich zur selben Zeit der entsprechenden Seite der Aussparung (19) der Grundplatte (16) nähert wie es sich zum oberen Teil der Aussparung (19) verschiebt und praktisch parallel zur Aussparung (19) oberhalb dieser eine Rückhalteplatte (38), auf diese hin das geneigte Fach (36) gerichtet ist.

13. Unterstützungstisch nach einem der Ansprüche 6 bis 12, dadurch gekennzeichnet, daß der Zentrierungszapfen (18A, 18'A) elastischen Mitteln (47) unterworfen ist, die ihn fortlaufend in Richtung der Seite vorspannen, die der Aussparung (19) der Grundplatte (16) gegenüberliegt.

14. Unterstützungstisch nach Anspruch 11, dadurch gekennzeichnet, daß der Hilfszapfen (18D, 18'D) elastischen Mitteln (53) unterworfen ist, die ihn fortlaufend in Richtung der der Aussparung (19) der Grundplatte (16) gegenüberliegenden Seite vorspannen.

15. Unterstützungstisch nach den Ansprüchen 13 bis 14 in Kombination, dadurch gekennzeichnet, daß der Zentrierungszapfen (18A, 18'A) und der Hilfszapfen (18D, 18'D) jeweils eine Zahnstange (57A, 57'A, 57D, 57'D) tragen, durch die sie gleichzeitig mit einem Ritzel (58, 58') kämmen, das zwischen ihnen angeordnet frei drehbar auf einem Riegel (59, 59') angebracht ist, zur Verfügung des Benutzers, wobei der Riegel (59, 59') beweglich gelagert ist, und zwar parallel zur Schwenkachse (Z, Z') der Klappe (20, 20'), und zwar zwischen einer zurückgezogenen Warteposition und einer vorgeschobenen Arbeitsposition, wobei für die zurückgezogene Warteposition zwischen dem Riegel (59, 59') und der Klappe (20, 20') ausschaltbare Rastmittel vorgesehen sind, die zu einem gesteuerten Rückzug des Riegels (59, 59') in die zurückgezogenen Warteposition geeignet sind, wobei die Last der elastischen Mittel (47), denen der Zentrierungszapfen (18A, 18'A) unterworfen ist, höher ist als die der elastischen Mittel (53), denen der Hilfzapfen (18D, 18'D) unterworfen ist.

16. Unterstützungstisch nach einem der Ansprüche 1 bis 15, dadurch gekennzeichnet, daß er zwei Klappen (20, 20') aufweist, die nebeneinander angeordnet jeweils um parallele Schwenkachsen (Z, Z') schwenkbar gelagert sind.

17. Unterstützungstisch nach einem der Ansprüche 1 bis 16, dadurch gekennzeichnet, daß er ferner einen Hilfsträger (69) aufweist, der beweglich gelagert ist zwischen einer zurückgezogenen Position, in der er von der Aussparung (19) der Grundplatte (16) entfernt ist, und einer ausgefahrenen Position, in der er die Aussparung (19) überlagert.

18. Unterstützungstisch nach den Ansprüchen 9, 16 und 17, in Kombination, dadurch gekennzeichnet, daß der zweite Ausrichtunganschlag (18C) einstückig mit zwei Klappen (20, 20') ist, wobei der Hilfsträger (69) auf derselben Seite der Aussparung (19) der Grundplatte (16) angeordnet ist wie dieser zweite Ausrichtungsanschlag (18C), und er selbst beweglich gelagert ist zwischen einer zurückgezogenen Position, in der er von der Aussparung (19) der Grundplatte (16) entfernt ist, und einer ausgefahrenen Position, in der er in die Aussparung (19) vorspringt, wobei der Hilfsträger (69) und der Ausrichtungsanschlag (18C) unter einer gemeinsamen Steuerung stehen, die zur Verfügung des Benutzers ist, und aus der sich ergibt, daß der eine in zurückgezogener Position ist, wenn der andere in ausgefahrener Postion ist, und umgekehrt.

19. Unterstützungstisch nach Anspruch 18, dadurch gekennzeichnet, daß die genannte Steuerung eine Achse (70) aufweist, die senkrecht zur Ebene der Aussparung (19) der Grundplatte (16) ist, und auf der festgekeilt sind einerseits der Hilfsträger (69) und andererseits ein Ritzel (72), mit dem durch eine Zahnstange (73) ein Zapfen (68) eingreift, der der Träger des zweiten Ausrichtungsanschlags (18C) ist.

20. Unterstützungstisch nach Anspruch 18, dadurch gekennzeichnet, daß die Steuerung eine Achse (70) aufweist, die senkrecht zur Ebene der Aussparung (19) der Grundplatte (16) ist, und auf der festgekeilt sind einerseits der Hilfsträger (69) und andererseits der zweite Ausrichtungsanschlag (18C).

21. Unterstützungstisch nach einem der Ansprüche 17 bis 20, dadurch gekennzeichnet, daß der Endteil (77) des Hilfsträgers (69) klappbar bzw. einziehbar ist.

22. Unterstützungstisch nach einem der Ansprüche 17 bis 21, dadurch gekennzeichnet, daß der Endteil (77) des Hilfsträgers (69) abnehmbar ist.

23. Unterstützungstisch nach einem der Ansprüche 17 bis 22, dadurch gekennzeichnet, daß der Hilfsträger (69) Mittel aufweist, die geeignet sind, eine Schablone anzubinden.

24. Unterstützungstisch nach einem der Ansprüche 17 bis 22, dadurch gekennzeichnet, daß der Hilfsträger (69) Mittel aufweist, die geeignet sind, ein Glas damit zu verbinden.
